# EUROPÄISCHE PATENTSCHRIFT

(11) **EP 1 932 348 B1**
(45) Veröffentlichungstag und Bekanntmachung des Hinweises auf die Patenterteilung: **15.05.2013**
(21) Anmeldenummer: 07803289.3
(22) Anmeldetag: 06.09.2007
(51) Int. Cl.: H04N 21/81

(54) **VORRICHTUNG UND VERFAHREN ZUM INDIVIDUELLEN WECHSEL ZWISCHEN SENDUNGEN**
DEVICE AND METHOD FOR INDIVIDUAL SWITCHING BETWEEN PROGRAMMES
PROCÉDÉ ET DISPOSITIF DE SÉLECTION INDIVIDUELLE D'ÉMISSIONS

(30) Priorität: 18.09.2006 DE 102006043701
(43) Veröffentlichungstag der Anmeldung: 18.06.2008
(73) Patentinhaber: Nokia Siemens Networks GmbH & Co. KG, 81541 München (DE)
(72) Erfinder: JENZOWSKY, Stefan, 82166 Gräfelfing (DE); LÖBIG, Norbert, 64291 Darmstadt (DE); STELZL, Rudolf, 85221 Dachau (DE)
(74) Vertreter: Krombach, Rainer
(86) Internationale Anmeldenummer: PCT/EP2007/059334
(87) Internationale Veröffentlichungsnummer: WO 2008/034722

(56) Entgegenhaltungen:
- WO-A-00/40025
- WO-A-01/33848
- WO-A-02/104001
- WO-A-2006/035406
- DE-A1- 10 000 927
- DE-A1- 19 925 387
- US-A1- 2003 046 702
- US-A1- 2004 128 690

## Beschreibung

Funk- und Fernsehprogramme erreichen ihren Zuschauer- bzw. Zuhörerkreis über eine Vielzahl von Übertragungswegen. Neben einem terrestrischen Empfang gewinnt die Verbreitung der Funk- und Fernsehprogramme über Fest- und Mobilfunknetze zunehmend an Bedeutung. Eine Vielzahl der Sendungen sind zum Beispiel auch durch einen Video on Demand Dienst abrufbar. Zum Auffinden von Programmbeiträgen und zur Planung von Verweilzeiten vor einem Multimediagerät werden dem Multimediateilnehmer Programminformationen sowie Electronic Program Guides EPG Daten angeboten.

Aus der Veröffentlichung WO 02/104001 A (DIGEO INC[US]), 27. Dezember 2002 (2002-12-27), ist ein Verfahren zum Ersetzen eines Inhalts während einer Programmpause bekannt, welches Erkennen einer Pause in einem Broadcast Programm einschließt und Anzeigen eines Ersatzinhalts als Antwort auf die Pause. Ferner ist ein Verfahren zum Ersetzen eines Broadcast Inhalts bekannt, welcher auf einem Schirm angezeigt wird, umfassend Bestimmen eines Auftretens einer Pause in einem Broadcast Inhalt und Anzeigen eines Ersatzinhalts auf dem Schirm als Antwort auf das Auftreten der Pause. Das Verfahren kann ferner ein Anzeigen des Broadcast Inhalts einschließen, wenn die Pause beendet ist.

Der Erfindung liegt die Aufgabe zugrunde, eine Vorrichtung und ein dazugehöriges Verfahren zum individuellen Wechsel zwischen von Broadcast- und Unicastsendungen anzugeben.

Die Lösung der Aufgabe ergibt sich aus den Merkmalen der Patentansprüche 1 oder 6.

Die Erfindung bringt den Vorteil mit sich, dass ein Übergang von einer Broadcastsendung zu einer gleichen z.B. im Unicastmode aussendbaren Sendung durchführbar ist.

Die Erfindung bringt den Vorteil mit sich, dass ein Übergang von einem mittels Broadcast ausgestrahlten Sendebeitrag zu einem inhaltsgleichen im Unicastmode aussendbaren und unterbrechungsfreien Sendebeitrag schnell ermöglicht und so eine aktuelle und/oder zukünftige Unterbrechung umgehbar wird.

Die Erfindung bringt den weiteren Vorteil mit sich, dass es bei einem Übergang von einer Broadcast- zu einer Unicastsendung gleichen Inhalts zu keinem Ausfall oder zu keinen Wiederholungen von Sendeabschnitten kommt.

Weitere Besonderheiten der Erfindung werden aus den nachfolgenden näheren Erläuterungen zu Ausführungsbeispielen anhand von Zeichnungen ersichtlich.

Es zeigen:
- Figur 1: ein Blockschaltbild für einen Empfang von Sendungen,
- Figur 2: ein weiteres Blockschaltbild und
- Figur 3: eine weitere Ausgestaltung.

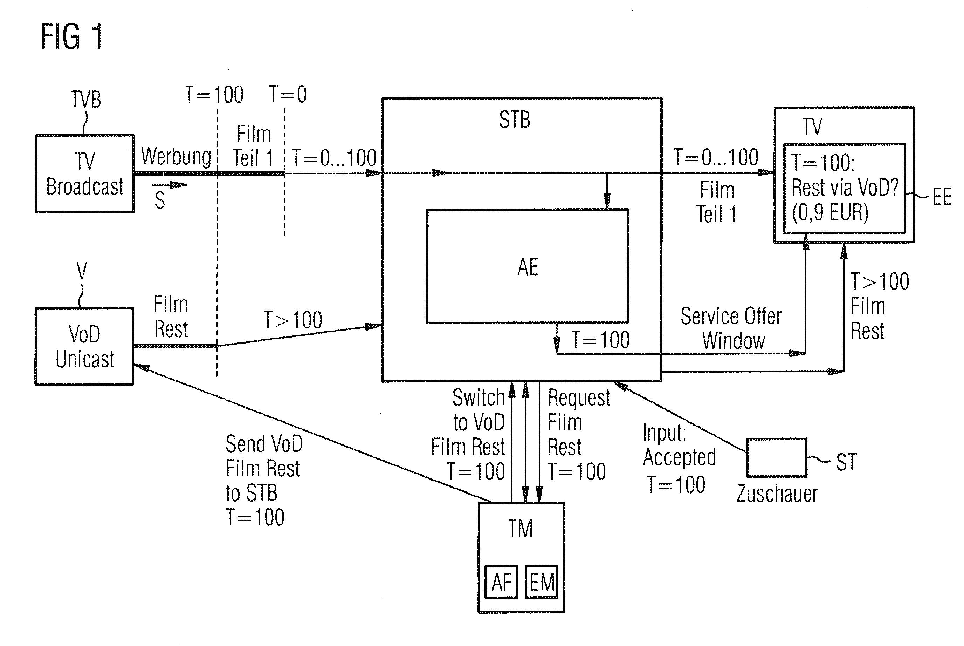

In Figur 1 ist schematisch ein Blockschaltbild für einen Empfang von Sendungen mittels Broadcast und/oder Unicast wiedergegeben. Ausgehend von einer Broadcaststation TVB, insbesondere TV Broadcaststation, werden Sendungen bzw. Sendebeiträge an mögliche Empfangseinheiten verteilt. Die Verteilfunktion kann ebenfalls durch der Broadcaststation TVB nachgeordnete Einrichtungen unterstützt werden, wie z. B. TV Headends und Router zur Umsetzung des TV Broadcastsignals in die jeweilige Transporttechnologie bzw. zur Weiterleitung des TV Broadcastsignales in dieser Transporttechnologie, z.B. gemäß Internetprotokoll, was in Figur 1 aus Gründen der Einfachheit nicht dargestellt ist. In diesem Beispiel wird das Sendesignal S von einer Empfangseinheit, wie beispielsweise einer Set Top Box STB, empfangen und an ein damit verbundenes Visualisierungsequipment TV weitergeleitet. In der Set Top Box STB ist in einer Empfangseinheit eine Analyseeinheit AE zur Erkennung von inhaltlichen Unterbrechungen beispielsweise hervorgerufen durch Werbeblöcke, integriert. In einer mit der Set Top Box verbundenen Managementeinheit TM ist eine Ermittlungseinheit EM sowie eine Anforderungseinheit AF angeordnet. Die Ermittlungseinheit EM ist dabei derart ausgeprägt, dass weitere Sendungen, die ähnlich oder gleich denen sind, die aktuell vom Multimediateilnehmer beispielsweise über Broadcast empfangen werden können, bestimmbar sind. Diese Ermittlungseinheit EM kann auch zentral z.B. bei einem Provider angeordnet sein. Die von der Ermittlungseinheit EM selektierten weiteren Sendungen werden per Unicast empfangen. Die per Broadcast empfangbaren Sendungen können auch als erste Sendungen und die beispielsweise per Unicast empfangbaren Sendungen können auch als zweite Sendungen bezeichnet werden. Die zweiten Sendungen sind vorzugsweise frei von zusätzlichen Sendebeiträgen wie z.B. Werbespots. Mit der Anforderungseinheit AF können Bezugskonditionen zwischen dem Multimediateilnehmer und einem Anbieter einer zweiten Sendung abgewickelt werden. Ein Bezug und/oder Empfang von aktuellen oder aufgezeichneten Sendungen aus einer TV Community ist möglich. Die abgebildete Managementeinheit TM ist mindestens mit einem Provider verbunden.

Die Analyseeinheit AE ermöglicht beispielsweise eine Werbeblockerkennung durch eine mitlaufende prozessorgesteuerte Auswertung des Sende- und/oder Programminhalts. Ein Werbeblock könnte zum Beispiel durch Wegfall eines in eine Programmsendung eingeblendeten Logos von einer dieses Programm ausstrahlenden Programmstation erkannt werden.

In der Managementeinheit TM oder in der Ermittlungseinheit EM werden Electronic Program Guide Daten, die entweder über einem empfangenen Broadcast Kanal, von einem Provider oder über eine hier nicht näher spezifizierte Schnittstelle an der Set Top Box empfangen werden, zwischengespeichert und zur Ermittlung von zweiten Sendungen ausgewertet. Diese Elektronic Program Guide Daten können Sendezeitpunkte, Länge der Sendung, einer internationalen Filmkennzeichnung sowie Zusatzinformationen von Filmen, Sendungen oder Beiträgen sein. Zusätzlich werden Datensätze von über Unicast abrufbaren Filmen oder Beiträgen Informationen über Sendedauer, Autor sowie Kurzbeschreibungen ausgewertet.

Nach der Bereitstellung der Electronic Program Guide Daten eines empfangbaren Broadcastprogramms und/oder mit Aussendung eines empfangbaren Broadcastprogramms erfolgt in der Ermittlungseinheit EM ein mitlaufender Vergleich zwischen den verfügbaren Datensätzen unter Berücksichtigung von Wahrscheinlichkeiten um zu einer sicheren Selektion von z.B. gleichen Sendungen ohne Werbesequenzen aus einer zweiten Quelle, einer so genannten second Source, zu gelangen. I. a. kann schon aus der Art der zweiten Quelle auf die Werbeblockfreiheit einer zweiten Sendung geschlossen werden. Die ausgewählten zweiten Sendungen werden in einem Fenster dem Multimediateilnehmer bei Bedarf angezeigt. Der angesprochene Datenvergleich kann permanent im Hintergrund der Ermittlungseinheit EM ablaufen.

Im Vorfeld eines selektiven Empfangs einer Sendung von einem weiteren Anbieter wird, wie oben aufgeführt, mittels eines Vergleiches von angebotenen zweiten Sendungen anhand einer Vielzahl von Vergleichskriterien wie Titel, Spieldauer, Produktionsdatum, Mitwirkende und weitere Herkunftsmerkmale, eine zweite Sendung gleichen oder entsprechenden und i. a. annähernd gleichen Inhalts zur ersten Sendung selektiert und dem Zuschauer oder Zuhörer als unterbrechungsfreie zweite Sendung über Signalisierungsfelder der Multimediaeinrichtung angezeigt. In diesem Zusammenhang können dem Zuschauer auch weitere Versionen von Sendungen wie beispielsweise Kurzfassungen, ungekürzte Produktionen von zweiten Sendungen, weitere zweite Sendungen, ergänzende oder ähnliche Sendungen mit einer anderen Besetzung, Regie oder Spieldauer angeboten werden. Der Zuschauer bekommt dazu beispielsweise ein Angebot zum Kauf einer unterbrechungsfreien zweiten Sendung oder eines unterbrechungsfreien Films von einem anderen Provider angezeigt.

Akzeptiert der Multimediateilnehmer mögliche Kauf- und/oder Lizenzbedingungen, werden Sende- und Empfangsprozeduren durch die Anforderungseinheit AF oder die Managementeinheit TW abgewickelt und die Ausgabe der Sendung gestartet. Dieser Wechsel vom Broadcastmode zum Unicastmode wird, wie in Fig. 1 angedeutet, bei T=100 eingeleitet. In der bis zu diesem Zeitpunkt per Broadcast ausgestrahlten ersten Sendung wird zum Zeitpunkt T=100 beispielsweise mit der Aussendung eines Werbeblocks begonnen. Die beispielsweise in der Set Top Box angeordnete Analyseeinheit AE erkennt den in der ersten Sendung vollzogenen Wechsel zu einem Werbebeitrag und öffnet auf einem Display oder Bildschirm ein Fenster mit einer möglichen Auflistung der von der Ermittlungseinheit EM ermittelten ähnlichen/gleichen zweiten Sendungen oder gleichen Sendebeiträgen ohne Unterbrechung. Die gezeigte Anordnung schaltet nach Anforderung einer zweiten Sendung vom Zuschauer oder Zuhörer und bei Zustimmung zu einem evtl. Gebührenaufkommen oder einer Lizenzbedingung zum Zeitpunkt T>100 auf die bei einem Provider z. B. per Unicast abrufbaren zweiten Sendung um.

Mit einer Zustimmung des Zuschauers bzw. Zuhörers zu providerabhängigen Sendebedingungen sowie insbesondere der möglicherweise entstehenden Kosten erfolgt ein Anfordern des Restfilms über ein Request von der Managementeinheit TM. Die Managementeinheit TM oder die Anforderungseinheit AF wickelt die nötigen Signalisierungsprozeduren zwischen Provider und Set Top Box z.B. vor Beginn der Übertragung des Restfilms ab. In der Set Top Box erfolgt eine Umschaltung des Empfangs auf die mittels Unicastmode empfangbare zweite Sendung oder des mittels Unicastmode empfangbaren Restfilms. Die mittels Unicast übertragene zweite Sendung wird anstelle des über Broadcast empfangbaren Films an die Multimediaeinrichtung TV weitergeleitet.

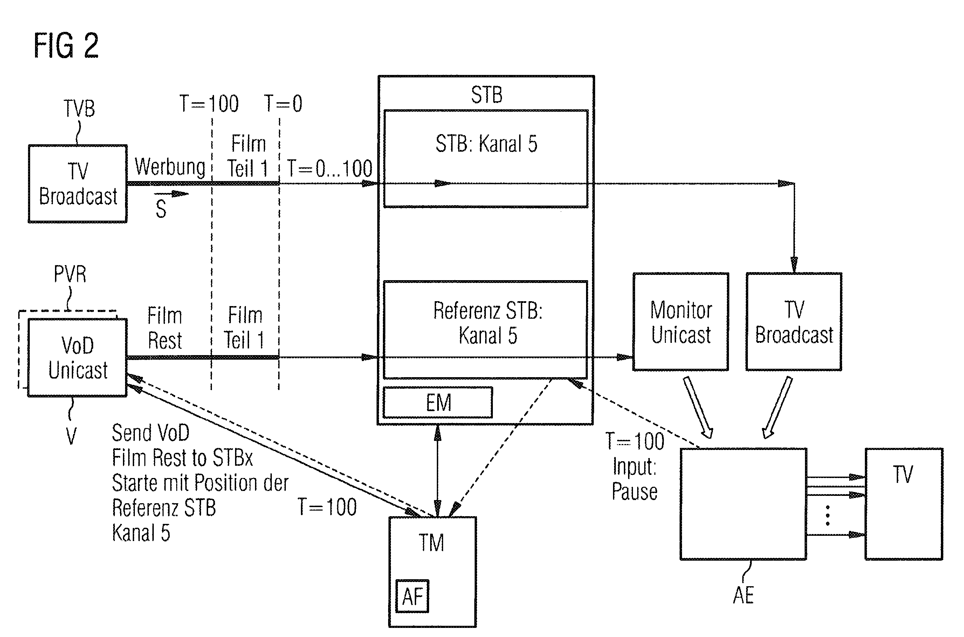

Eine weitere Ausgestaltung einer Vorrichtung und des dazugehörigen Verfahrens zur Umschaltung zwischen einer über Broad- und Unicast empfangbaren Sendung ist in Figur 2 dargestellt. Mit dieser Anordnung können eine Vielzahl von Multimediateilnehmern versorgt werden. Hier wird beispielsweise in einer Auswerteeinheit AE das Broadcastsignal einer ersten Sendung mit einem von einem weiteren Anbieter empfangbaren gleichen zweiten Sendung prozessorgesteuert verglichen und Synchronisationsprozeduren eingeleitet. Diese Synchronisation kann zentral oder, wenn die hierfür nötige Rechenleistung und Übertragungsbandbreite bei mindestens einem Multimediateilnehmer vorhanden ist, vor Ort erfolgen. Eine vorherige Auswahl von einer inhaltsgleichen Sendung oder einer der ursprünglichen Sendung ähnlichen Sendung erfolgt wie oben beschrieben.

Bei einer lokalen Bearbeitung ist die in Fig. 2 angedeutete mitlesende Referenz Set Top Box beim o. g. Multimediateilnehmer angeordnet. Bei einer zentralen Synchronisation würde die von einem Dritten angebotene gleiche Sendung mit einer zugeordneten Broadcastsendung synchronisiert und nach individueller Anforderung, beispielsweise mit Beginn eines Werbebeitrags an der Stelle des Broadcast Films nach einer Akzeptanz der Sendebedingungen des Providers durch den Empfänger oder der Empfängergruppe, jeweils vorzugsweise von der Unicast Quelle V direkt an den anfordernden Multimediateilnehmer mittels Unicastmode geleitet.

Eine Synchronisation des per Unicast von einem Provider oder einer TV- oder Internetcommunity empfangbaren Filmbeitrags mit dem Referenz-Set Top Box System auf das per Broadcast empfangbare Programm kann ebenso prozessorgesteuert per Pause/Restart, Vor- und Rücklauf erfolgen. Anforderungen für ein Aussenden des unterbrechungsfreien Restvideos werden unter anderem durch die Managementeinheit TM entgegengenommen.

Mit dieser Anordnung kann die weitere Ausgabe des Restvideos an jede weitere mit der Managementeinheit TM in Wirkverbindung stehende Set Top Box an der Stelle erfolgen, an der das Referenzsystem einen Werbeblock selektiert. Eine Umschaltung kann zentral oder z.B. durch Betätigung einer definierten Funktionstaste einer Fernbedienung oder nach expliziter Eingabe einer Einverständniserklärung oder eines Berechtigungsnachweises (PIN, Password) durch den Multimediateilnehmer erfolgen. Kann die Anforderungseinheit AF eine Video on Demand Ausgabe nicht direkt ansteuern, so kann die Video on Demand Ausgabe ersatzweise als Kopie einer Personal Video Recording-Funktion PVR verfügbar gemacht werden. Der Start des Restvideos auf Anforderung eines oder mehrerer Zuschauer erfolgt unter Bezugnahme auf die Halteposition des Personal Video Recorder-Systems bzw. des Referenzsystems über die Managementeinheit TM.

Die in Figur 2 in der Referenz STB dargestellte Ermittlungseinheit EM kann ebenfalls Teil der Managementfunktion TM sein.

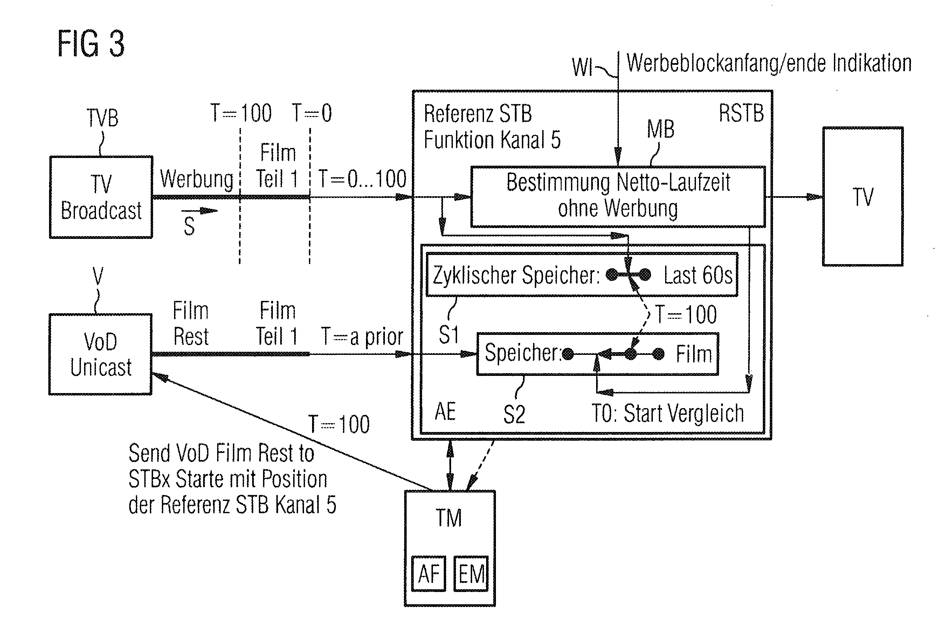

In Figur 3 ist eine weitere Ausgestaltung eines Aufbaus einer Vorrichtung sowie zugehörige Verfahrensschritte zum automatischen Wechsel von einer Broadcastsendung zu einer Unicastsendung gleichen oder nahezu gleichen Inhalts gezeigt. Hier ist die Set Top Box die auch als Referenz Set Top Box RSTB bezeichnet werden kann derart ausgebildet, dass ein Modul MB die Nettolaufzeit einer mittels Broadcast ausgestrahlten ersten Sendung ermittelt. Des Weiteren ist eine Auswerteeinheit AE mit einer ersten und zweiten Speichereinheit S1, S2 vorgesehen. Die erste Speichereinheit S1 ist dabei derart ausgeprägt, dass diese beispielsweise jeweils die letzten 60 Sekunden des zur Zeit ausgestrahlten Broadcastprogramms zwischenspeichert. Ein identischer vorselektierter Beitrag der 2nd Unicast Source, wie unter Fig. 1 oder 2 beschrieben, wird in der lokalen zweiten Speichereinheit S2 der Set Top Box STB zwischengespeichert. Die Referenz Set Top Box Funktion hat beispielsweise zusätzlich Zugriff auf eine externe Werbeblockbeginn- bzw. Werbeblockendeindikation. Damit kann der bisher gezeigte Nettoprogramminhalt des Broadcast Programms bestimmt werden. Die externe Werbeblockindikation gibt einen Anhaltspunkt, an welcher Stelle des per Unicast erhältlichen Beitrags fortzusetzen ist. Mit der verfügbaren Audio- und Video-Information z. B. dem Werbeblockbeginn und den in den Speichern S1, S2 zwischengespeicherten Abschnitten des identischen Beitrags kann ein genauer Fortsetzungszeitpunkt mikroprozessorgesteuert festgelegt werden. Der gefundene Fortsetzungszeitpunkt wird an die Managementeinheit TM gemeldet. Nach Zustimmung des Multimediateilnehmers zu Bezugsbedingungen von Seiten des Providers erfolgt eine Umschaltung auf den Unicast Empfang.

Wird der Beginn eines Werbeblocks erkannt oder signalisiert, so veranlasst z.B. die Set Top Box eine Ausgabe eines Fensters auf dem Bildschirm. In diesem wird der Fernsehzuschauer darauf aufmerksam gemacht, dass die erste Sendung durch eine zweite unterbrechungsfreie Sendung ersetzt werden kann, siehe hierzu die Beschreibungen zur den Einheiten EM, AE und AF.

Akzeptiert der Fernsehzuschauer das Angebot und erledigt dieser die erforderlichen Eingaben hinsichtlich Identifizierung oder Zahlungsbedingungen wie z.B. PIN/Passwort/Account-No., so aktiviert die Managementeinheit TM die Ausgabe der 2nd Unicast Source.

Als einfachstes Kriterium für die Fortsetzung der 2nd Unicast Source an einer gewünschten Stelle kann die aktuelle Zeit dienen, die mit dem angekündigten Beginnzeitpunkt der TV Broadcast Source in Relation gesetzt wird. Hat die Aussendung eines Films/Sendebeitrags zum angekündigten Zeitpunkt begonnen und ist der Film/Sendebeitrag der 2nd Unicast Source identisch oder nahezu identisch zu dem über Broadcast verbreiteten Film/Sendebeitrag, kann bei Vorliegen des ersten Werbeblockeinschubs sofort der Film/Sendebeitrag durch den über die 2nd Unicast Source empfangbaren Film/Sendebeitrag fortgesetzt werden. Bei einer Vielzahl von Werbeeinschüben und/oder einem verschobenen Sendebeginn des Films/Sendebeitrags führen jeweils einzeln die in den Figuren 1 bis 3 gezeigten und beschriebenen Ausführungsformen zum gezielten Wechsel zwischen Broadcast und Unicastsendungen gleichen oder entsprechende Inhalts.

Eine einem Fernsehkanal, z.B. Kanal 5, wie in Fig. 2 gezeigt, zugeordnete zentrale Referenz-Set Top Box ermittelt den tatsächlichen Start des Beitrags mit 2nd Unicast Source sowie die Summe der in diesem Beitrag aufgelaufenen und bereits beendeten Werbeblöcke.

Das Bestimmen des Fortsetzungszeitpunkts in einer 2nd Unicast Source ist ein hinsichtlich Programmkanal, Beitrag und jeweiliger Werbepause einmaliger Vorgang. Die Ermittlung des Fortsetzungszeitpunktes kann zentral oder dezentral erfolgen.

Der Suchvorgang nach möglichen gleichen/inhalts- oder themengleichen Sendebeiträgen vor einer ersten Anforderung eines Programmbeitrags aus der 2nd Unicast Source kann auch durch den Fernsehzuschauer angestoßen werden.

Das Referenz Set Top Box System kann auch aus zwei Set Top Boxen bestehen, wobei das ausgestrahlte TV-Broadcast-Programm jeweils mit einer 2nd Unicast Source mitlaufend prozessorgesteuert verglichen wird und durch Pause-, Vor- und Rücklauffunktion die 2nd Unicast Source, insbesondere bei Beginn einer Werbepause einen Umschaltzeitpunkt festlegt, siehe hierzu auch Fig. 2. Wird sukzessiv die unmittelbare Fortsetzung des Sendebeitrags aus der 2nd Unicast Source durch die Fernsehzuschauer angefordert, so erfolgt die Ausgabe der 2nd Source ab dem Umschaltezeitpunkt.

Ist die Fortsetzungsstelle in der 2nd Unicast Source wie zuvor beschrieben bestimmt, so wird der einzelne TV-Zuschauer oder eine Vielzahl von an das Referenzsystem angeschlossenen TV-Zuschauern die bei einer vorliegenden Werbepause die Sendebedingungen akzeptieren, individuell auf den gleichen Fortsetzungszeitpunkt in der 2nd Unicast Source geschaltet. Das Angebot erlischt im einfachsten Fall, wenn das Ende der jeweiligen Werbepause erreicht ist. Bei einem mitlaufenden Vergleich zwischen einem TV Broadcast Beitrag und seiner 2nd Unicast Source, ist eine Umschaltung auch außerhalb von Werbepausen möglich.

Das Verfahren ist genauso anwendbar für Audio-Sendungen, bzw. Musiksendungen, die durch Wortbeiträge unterbrochen werden. In diesem Falle erfolgt die Angebotsausgabe vorzugsweise über ein Display des Endgeräts. Dialogeingaben des Zuhörers können direkt über das Display eines Endgerätes oder über Tastenfunktion bei Steuerungseinheiten erfolgen.

Eine prozessorgestützte Referenz Set Top Box kann auf der Rechnerplattform der Managementeinheit TM, auf der Hardware des TV Headend Systems das für die Einspeisung des TV Broadcast Programms in das Verteilnetz zuständig ist, auf der Hardware des Video on Demand Systems, das für die Bereitstellung der Video on Demand Beiträge im Unicast Mode zuständig ist, oder auf einer eigenen separaten Hardware implementiert sein.

Zur Fortsetzung des Beitrags aus der 2nd Unicast Source kann die Set Top Box gegebenenfalls die 2nd Unicast Source auch über einen terrestrischen Empfang oder Satellitenempfang erfolgen.

Die Funktionen der vorstehend genannten Empfangseinheit (STB) und der Ausgabeeinheit (TV) können auch in einer einzigen kombinierten Empfangs- und Ausgabeeinheit zusammengefasst sein. Ein solches kombiniertes Empfangs- und Ausgabegerät kann beispielsweise ein Mobiltelephon mit geeignetem Display und SW/FW Funktionalität oder ein PC mit geeigneten Interface Karten und geeigneter SW sein.

## Patentansprüche

1. Vorrichtung zum individuellen Wechsel zwischen einer ersten Sendung, welche per Broadcast empfangbar ist, und einer zweiten Sendung, welche per Unicast empfangbar ist, mit
einer Empfangseinheit (STB) sowie einer Ausgabeeinheit (TV) von mindestens einer Sendung,
**dadurch gekennzeichnet,**
**dass** eine Ermittlungseinheit (EM) vorgesehen ist, wobei diese derart ausgeprägt ist, dass zu der ersten Sendung mindestens eine zugehörige zweite Sendung ermittelbar ist, welche mit der ersten Sendung inhaltsgleich ist,
**dass** eine Analyseeinheit (AE) derart ausgeprägt ist,
**dass** ein Zeitpunkt eines Beginns eines die erste Sendung unterbrechenden Sendebeitrags erkannt und ein Fortsetzungszeitpunkt für die zweite Sendung festlegbar ist, so dass es beim Wechsel von der ersten zu der zweiten Sendung zu keinem Ausfall und zu keinen Wiederholungen von Sendeabschnitten kommt, und die zweite Sendung ab diesem ';;. "_" Fortsetzungszeitpunkt zur Ausgabeeinheit (TV) übertragen wird.

2. Vorrichtung nach Anspruch 1,
**dadurch gekennzeichnet,**
**dass** eine Anforderungseinheit (AF, TM) vorgesehen ist, die Prozeduren zur Abwicklung von Bezugsbedingungen zwischen einem eine zweite Sendung ab Fortsetzungszeitpunkt anbietenden Provider und einem die zweite Sendung ab Fortsetzungszeitpunkt anfordernden Multimediateilnehmer abarbeitet.

3. Anordnung nach Anspruch 1 oder 2,
**dadurch gekennzeichnet,**
**dass** die Ermittlungseinheit (EM) aufgrund von verfügbaren den ersten und zweiten Sendungen zuordenbaren Identifikationsda ten wie Produktionsdatum, Spieldauer, Besetzung, Titel oder einer internationalen Sendungskennzeichnung eine der ersten Sendung entsprechende zweite Sendung ermittelt.

4. Anordnung nach Anspruch 1, 2 oder 3,
**dadurch gekennzeichnet,**
**dass** eine Managementeinheit (TM) ein Ausgabegerät (TV) derart ansteuert, dass auf diesem ein Fenster gebildet wird, in dem verfügbare zweite Sendungen anzeigbar sind.

5. Anordnung nach Anspruch 4,
**dadurch gekennzeichnet,**
**dass** die Managementeinheit (TM) derart ausgeprägt ist, dass eine zur Freigabe von zweiten Sendungen ab Fortsetzungszeitpunkt nötige Abgabe einer Einverständniserklärung (PIN,..) eines die zweite Sendung ab Fortsetzungszeitpunkt empfangenden Multimediateilnehmers zu Bezugsbedingungen von vorbelegbaren Funktionstasten zugeordneten Speichereinheiten einer zum Multimediaequipment gehörenden Stell- oder Steuereinheit (ST) abgebbar sind.

6. Anordnung nach einem der Ansprüche 1 bis 5,
**dadurch gekennzeichnet,**
**dass** die Analyseeinheit (AE) in einer Empfangseinheit (STB) zur Erkennung von inhaltlichen Unterbrechungen, beispielsweise hervorgerufen durch Werbeblöcke, integriert ist.

7. Anordnung nach einem der Ansprüche 1 bis 6,
**dadurch gekennzeichnet,**
**dass** die zweite Sendung frei von zusätzlichen Sendebeiträgen, wie z. B. Werbespots, ist.

8. Verfahren zum individuellen Wechsel zwischen einer ersten und zweiten Sendung mit
einer Empfangseinheit (STB) sowie einer Ausgabeeinheit (TV) von mindestens einer Sendung,
**dadurch gekennzeichnet,**
**dass** zu der ersten Sendung, welche per Broadcast empfangbar ist, mindestens eine der ersten Sendung entsprechende zweite Sendung ermittelbar ist, welche per Unicast empfangbar ist, keine Unterbrechung aufweist und welche mit der ersten Sendung inhaltsgleich ist,
**dass** ein Zeitpunkt eines Beginns eines die erste Sendung unterbrechenden Sendebeitrags erkannt und ein Fortsetzungszeitpunkt für die zweite Sendung festlegbar ist, so dass es beim Wechsel von Empfang der ersten zu der zweiten Sendung zu keinem Ausfall und zu keinen Wiederholungen von Sendeabschnitten kommt, und die zweite Sendung ab Fortsetzungszeitpunkt zur Ausgabeeinheit (TV) übertragen wird.

9. Verfahren nach Anspruch 8,
**dadurch gekennzeichnet,**
**dass** Prozeduren zur Abwicklung von Bezugsbedingungen zwischen einem eine zweite Sendung ab Fortsetzungszeitpunkt anbietenden Provider und einem die zweite Sendung ab Fortsetzungszeitpunkt anfordernden Multimediateilnehmer abgearbeitet werden.

10. Verfahren nach Anspruch 8 oder 9,
**dadurch gekennzeichnet,**
**dass** aufgrund von verfügbaren den ersten und zweiten Sendungen zuordenbaren Identifikationsdaten wie Produktionsdatum, Spieldauer, Besetzung, Titel oder einer internationalen Sendungskennzeichnung eine der ersten Sendung entsprechende zweite Sendung ermittelt wird.

11. Verfahren nach Anspruch 8, 9 oder 10,
**dadurch gekennzeichnet,**
**dass** das Ausgabegerät (TV) derart angesteuert wird, dass auf diesem ein Fenster gebildet wird, in dem verfügbare zweite Sendungen angezeigt werden.

12. Verfahren nach Anspruch 11,
**dadurch gekennzeichnet,**
**dass** eine zur Freigabe von zweiten Sendungen ab Fortsetzungszeitpunkt nötige Abgabe einer Einverständniserklärung (PIN,..) eines die zweite Sendung ab Fortsetzungszeitpunkt empfangenden Multimediateilnehmers zu Bezugsbedingungen von vorbelegbaren Funktionstasten zugeordneten Speichereinheiten einer zum Multimediaequipment gehörenden Stell- oder Steuereinheit (ST) abgegeben werden.

13. Verfahren nach einem der Ansprüche 8 bis 12,
**dadurch gekennzeichnet,**
**dass** die zweite Sendung frei von zusätzlichen Sendebeiträgen, wie z. B. Werbespots, ist.

14. Verfahren nach einem der Ansprüche 8 bis 13,
**dadurch gekennzeichnet,**
**dass** eine externe Werbeblockindikation einen Anhaltspunkt gibt, an welcher Stelle der zweiten Sendung fortzusetzen ist.

15. Verfahren nach Anspruch 14,
**dadurch gekennzeichnet,**
**dass** mit einem Werbeblockbeginn und in Speichern (S1, S2) zwischengespeicherten Abschnitten der ersten und der zweiten Sendung der Fortsetzungszeitpunkt mikroprozessorgesteuert festgelegt wird.

## Claims

1. Device for individually switching between a first programme which can be received via broadcast, and a second programme which can be received via unicast, comprising a receiver unit (STB) and an output unit (TV) of at least one programme, **characterized in that** a determining unit (EM) is provided, the latter being arranged in such a manner that at least one associated second programme can be determined for the first programme, which second programme has the same content as the first programme
that an analysis unit (AE) is arranged in such a manner that a time of a beginning of a programme contribution interrupting the first programme is recognized and a time of continuation for the second programme can be determined, so that when switching from the first to the second programme there is no failure and no repetitions of programme sections, and the second programme is transmitted to the output unit (TV) starting at this time of continuation.

2. Device according to Claim 1, **characterized in that** a requesting unit (AF, TM) is provided which runs procedures for handling delivery conditions between a provider providing a second programme from the time of continuation and a multimedia subscriber requesting the second programme from the time of continuation.

3. Arrangement according to Claim 1 or 2, **characterized in that** the determining unit (EM) determines a second programme corresponding to the first programme on the basis of available identification data, which can be allocated to the first and second programmes, such as production date, playing time, casting, title or an international programme identification.

4. Arrangement according to Claim 1, 2 or 3, **characterized in that** a management unit (TM) drives an output device (TV) in such a manner that a window is formed on it in which available second programmes can be indicated.

5. Arrangement according to Claim 4, **characterized in that** the management unit (TM) is arranged in such a manner that a delivery, necessary for releasing second programmes from the time of continuation, of a declaration of agreement (PIN, ...) of a multimedia subscriber receiving the second programme from the time of continuation, to delivery conditions can be delivered by storage units, allocated to preassignable function keys, of an adjusting or control unit (ST) belonging to the multimedia equipment.

6. Arrangement according to one of Claims 1 to 5, **characterized in that** the analysis unit (AE) is integrated in a receiver unit (STB) for recognizing content interruptions, for example caused by advertising blocks.

7. Arrangement according to one of Claims 1 to 6, **characterized in that** the second programme is free of additional programme contributions such as, e.g. advertising spots.

8. Method for individually switching between a first and second programme comprising
a receiver unit (STB) and an output unit (TV) of at least one programme, **characterized in that** for the first programme which can be received via broadcast at least one second programme corresponding to the first programme can be determined, which second programme can be received via unicast, has no interruptions and has the same content as the first programme, that a time of a beginning of a programme contribution interrupting the first programme is recognized and a time of continuation can be specified for the second programme so that when switching from the reception of the first to the second programme there is no failure and no repetitions of programme sections, and the second programme is transmitted to the output unit (TV) from the time of continuation.

9. Method according to Claim 8, **characterized in that** procedures for handling delivery conditions between a provider providing a second programme from the time of continuation and a multimedia subscriber requesting the second programme from the time of continuation are processed.

10. Method according to Claim 8 or 9, **characterized in that** a second programme corresponding to the first programme is determined on the basis of available identification data, which can be allocated to the first and second programmes, such as production date, playing time, casting, title or an international programme identification.

11. Method according to Claim 8, 9 or 10, **characterized in that** the output device (TV) is driven in such a manner that a window is formed on it in which available second programmes are indicated.

12. Method according to Claim 11, **characterized in that** a delivery, necessary for releasing second programmes from the time of continuation, of a declaration of agreement (PIN, ...) of a multimedia subscriber receiving the second programme from the time of continuation, to delivery conditions are delivered by storage units, allocated preassignable function keys, of an adjusting or control unit (ST) belonging to the multimedia equipment.

13. Method according to one of Claims 8 to 12, **characterized in that** the second programme is free of additional programme contributions such as, e.g. advertising spots.

14. Method according to one of Claims 8 to 13, **characterized in that** an external advertising block indication provides an indication about the point at which the second programme has to be continued.

15. Method according to Claim 14, **characterized in that** the time of continuation is specified under microprocessor control with a beginning of the advertising block and sections of the first and second programmes which are temporarily stored in stores (S1, S2) .

## Revendications

1. Dispositif pour passer individuellement d'une première émission qui peut être reçue en broadcast à une deuxième émission qui peut être reçue en unicast, avec une unité de réception (STB) et une unité de production en sortie (TV) d'au moins une émission, **caractérisé en ce que** :
- une unité de détermination (EM) est prévue, celle-ci étant configurée de manière telle que, pour la première émission, au moins une deuxième émission associée peut être déterminée, laquelle est de contenu identique à celui de la première émission ;
- une unité d'analyse (AE) est configurée de manière telle qu'un instant d'un début d'un élément d'émission interrompant la première émission est reconnu et un instant de poursuite peut être déterminé pour la deuxième émission, de sorte que, lors du passage de la première à la deuxième émission, aucune partie d'émission ne manque ni ne se répète et que la deuxième émission est transmise vers l'unité de sortie (TV) à partir de cet instant de poursuite.

2. Dispositif selon la revendication 1, **caractérisé en ce qu'**une unité de demande (AF, TM) est prévue, laquelle traite des procédures de déroulement de conditions d'obtention entre un fournisseur qui offre une deuxième émission à partir de l'instant de poursuite et un abonné multimédia qui demande la deuxième émission à partir de l'instant de poursuite.

3. Arrangement selon la revendication 1 ou 2, **caractérisé en ce que** l'unité de détermination (EM) détermine une deuxième émission correspondant à la première émission sur la base de données d'identification disponibles et pouvant être associées aux premières et deuxièmes émissions, telles que date de production, durée de l'émission, acteurs de l'émission, titre ou identification internationale de l'émission.

4. Arrangement selon la revendication 1, 2 ou 3, **caractérisé en ce qu'**une unité de gestion (TM) commande une unité de sortie (TV) de manière telle qu'apparaît sur celui-ci une fenêtre dans laquelle peuvent être visualisées des deuxièmes émissions disponibles.

5. Arrangement selon la revendication 4, **caractérisé en ce que** l'unité de gestion (TM) est configurée de manière telle que peut être émise, par des unités de mémoire d'une unité de réglage ou de commande faisant partie de l'équipement multimédia et associées à des touches de fonction pouvant être prédéfinies, une émission d'une déclaration de consentement (PIN, ...) d'un abonné multimédia qui reçoit la deuxième émission à partir de l'instant de poursuite, concernant des conditions d'obtention et nécessaire pour autoriser des deuxièmes émissions à partir de l'instant de poursuite.

6. Arrangement selon l'une des revendications 1 à 5, **caractérisé en ce que** l'unité d'analyse (AE) est intégrée à une unité de réception (STB) pour reconnaître des interruptions de contenu, dues par exemple à des blocs publicitaires.

7. Arrangement selon l'une des revendications 1 à 6, **caractérisé en ce que** la deuxième émission ne comporte pas d'éléments d'émission additionnels tels que, par exemple, des spots publicitaires.

8. Procédé pour passer individuellement d'une première émission à une deuxième émission, avec une unité de réception (STB) et une unité de production en sortie (TV) d'au moins une émission, **caractérisé en ce que** peut être déterminée, pour la première émission qui peut être reçue en broadcast, au moins une deuxième émission qui correspond à la première émission, peut être reçue en unicast, ne présente pas d'interruption et est de contenu identique à celui de la première émission, et **en ce qu'**un instant d'un début d'un élément d'émission interrompant la première émission est reconnu et un instant de poursuite peut être déterminé pour la deuxième émission, de sorte que, lors du passage de la réception de la première émission à la deuxième émission, aucune partie d'émission ne manque ni ne se répète et que la deuxième émission est transmise vers l'unité de sortie (TV) à partir de cet instant de poursuite.

9. Procédé selon la revendication 8, **caractérisé en ce que** sont traitées des procédures de déroulement de conditions d'obtention entre un fournisseur qui offre une deuxième émission à partir de l'instant de poursuite et un abonné multimédia qui demande la deuxième émission à partir de l'instant de poursuite.

10. Procédé selon la revendication 8 ou 9, **caractérisé en ce qu'**une deuxième émission correspondant à la première émission est déterminée sur la base de données d'identification disponibles et pouvant être associées aux premières et deuxièmes émissions, telles que date de production, durée de l'émission, acteurs de l'émission, titre ou identification internationale de l'émission.

11. Procédé selon la revendication 8, 9 ou 10, **caractérisé en ce que** l'unité de sortie (TV) est commandé de manière telle qu'apparaît sur celui-ci une fenêtre dans laquelle sont visualisées des deuxièmes émissions disponibles.

12. Procédé selon la revendication 11, **caractérisé en ce qu'**est émise, par des unités de mémoire d'une unité de réglage ou de commande faisant partie de l'équipement multimédia et associées à des touches de fonction pouvant être prédéfinies, une émission d'une déclaration de consentement (PIN, ...) d'un abonné multimédia qui reçoit la deuxième émission à partir de l'instant de poursuite, concernant des conditions d'obtention et nécessaire pour autoriser des deuxièmes émissions à partir de l'instant de poursuite.

13. Procédé selon l'une des revendications 8 à 12, **caractérisé en ce que** la deuxième émission ne comporte pas d'éléments d'émission additionnels tels que, par exemple, des spots publicitaires.

14. Procédé selon l'une des revendications 8 à 13, **caractérisé en ce qu'**une indication externe de bloc publicitaire fournit un point d'arrêt à quel endroit de la deuxième émission il y a lieu de poursuivre.

15. Procédé selon la revendication 14, **caractérisé en ce que** l'instant de poursuite est déterminé de manière commandée par microprocesseur avec un début de bloc publicitaire et des parties de la première et de la deuxième émission stockées temporairement dans des mémoires (S1, S2).
